# EUROPEAN PATENT APPLICATION

(11) **EP 4 691 767 A1**
(43) Date of publication of application: **11.02.2026**
(21) Application number: 24780686.2
(22) Date of filing: 28.03.2024
(51) Int. Cl.: B32B 27/00, B32B 27/04, B32B 27/42

(54) **DECORATIVE SHEET, RESIN-IMPREGNATED DECORATIVE PANEL, AND METHOD FOR MANUFACTURING RESIN-IMPREGNATED DECORATIVE PANEL**

(30) Priority: 31.03.2023 JP 2023057904
(71) Applicant: Dai Nippon Printing Co., Ltd., Tokyo 162-8001 (JP)
(72) Inventor: TSURUTA, Keisuke, Tokyo 162-8001 (JP); NISHINE, Miyuki, Tokyo 162-8001 (JP)
(74) Representative: Müller-Boré & Partner Patentanwälte PartG mbB
(86) International application number: PCT/JP2024/012745
(87) International publication number: WO 2024/204587

(57) **Abstract**

The present disclosure provides a decorative sheet used for a production of a resin-impregnated decorative plate, the decorative sheet comprising a porous substrate; a design layer; and a release layer formed in a pattern, in this order in a thickness direction, wherein a 60° gloss value of the release layer is 10 or less; a pure water contact angle of the release layer is 85° or more; and a Spc (arithmetic average curvature at mountaintop point) of the release layer is 80 mm⁻¹ or more.

## Description

### Technical Field

The present disclosure relates to a decorative sheet used for a production of a resin-impregnated decorative plate, a resin-impregnated decorative plate and a method for producing a resin-impregnated decorative plate.

### Background Art

Resin-impregnated decorative plates obtained by impregnating precursor such as melamine resin into porous substrates, and then, curing the resin precursor, are conventionally known. The resin-impregnated decorative plates are used for walls, furniture, and floors of houses, shops, and public facilities.

Melamine decorative plate expressing gloss matte tone designs are known. For example, Patent Document 1 discloses a decorative plate comprising a release layer aligned with a pattern, on a part of the surface of a porous substrate; on the remaining region of the surface where no release layer is disposed, a thermosetting resin layer including melamine resin is included; and the thermosetting resin impregnated into the porous substrate is cured.

### Citation List

### Patent Document

Patent Document 1: Japanese Patent No. 6716877

### Summary of Disclosure

### Technical Problem

The release layer of the decorative sheet used for the production of a resin-impregnated decorative plate is required to have two functions simultaneously: 1) a function to selectively peel the cured resin layer cured by the heating and pressurizing step, and 2) a function to exhibit a good gloss matte design by the difference in gloss from the cured resin layer. However, there is still room for consideration in the design of the decorative sheet having a stable balance of the two functions.

The present disclosure has been made in view of the above circumstances, and a main object of the present disclosure is to provide a decorative sheet used for the production of a resin-impregnated decorative plate wherein the cured resin layer cured by the heating and pressurizing step can be peeled off selectively; and a gloss matte design, by the gloss difference between the release layer and cured resin layer, can be exhibited.

### Solution to Problem

The present disclosure provides a decorative sheet used for a production of a resin-impregnated decorative plate, the decorative sheet comprising a porous substrate; a design layer; and a release layer formed in a pattern, in this order in a thickness direction, wherein a 60° gloss value of the release layer is 10 or less; a pure water contact angle of the release layer is 85° or more; and a Spc (arithmetic average curvature at mountaintop point) of the release layer is 80 mm⁻¹ or more.

The present disclosure provides a resin-impregnated decorative plate comprising: a decorative sheet including a porous substrate, a design layer, and a release layer formed in a pattern, in this order in a thickness direction; a core substrate disposed so as to face the porous substrate in the decorative sheet; and a cured resin layer disposed between patterns of the release layer, thicker than the release layer, and including a cured product of a curable resin Y, wherein the core substrate and the porous substrate includes the cured product of the curable resin Y; a pure water contact angle of the release layer is 85° or more; and a Spc (arithmetic average curvature at mountaintop point) of the release layer is 10 mm⁻¹ or more.

Also, the present disclosure provides a method for producing a resin-impregnated decorative plate, the method comprising: a preparing step of preparing the decorative sheet described above; a stacked body forming step of forming a stacked body (i) including a core substrate, the decorative sheet, a curable resin layer including a curable resin Y, and a release film, in this order in a thickness direction, (ii) disposed so that a porous substrate side surface of the decorative sheet faces the core substrate, and (iii) the decorative sheet is impregnated with the curable resin Y; a heating and pressurizing step of obtaining a cured stacked body by heating and pressurizing the stacked body to cured the curable resin Y while forming a cured resin layer from the curable resin layer; and a peeling step of removing the cured resin layer disposed at a position overlapping with the release layer in the thickness direction, while remaining the cured resin layer disposed between patterns of the release layer, by peeling the release film from the cured stacked body.

### Advantageous Effects of Disclosure

The present disclosure exhibits an effect that it is possible to provide a decorative sheet wherein the cured resin layer cured by the heating and pressurizing step can be peeled off selectively; and a gloss matte design, by the gloss difference between the release layer and cured resin layer, can be exhibited.

### Brief Description of Drawings

[FIG. 1] is a schematic cross-sectional view exemplifying a decorative sheet in the present disclosure.
[FIG. 2] is a schematic cross-sectional view exemplifying a decorative sheet in the present disclosure.
[FIG. 3] is a schematic cross-sectional view exemplifying a resin-impregnated decorative plate in the present disclosure.
[FIGS. 4] are schematic cross-sectional views exemplifying a method for producing a resin-impregnated decorative plate, using the decorative sheet in the present disclosure.
[FIGS. 5] are schematic cross-sectional views exemplifying a method for producing a resin-impregnated decorative plate, using the decorative sheet in the present disclosure.
[FIGS. 6] are views explaining a method for preparing a backing plate used to measure the 60° gloss value of the release layer in Examples.

### Description of Embodiments

Embodiments are hereinafter explained with reference to, for example, drawings. However, the present disclosure is implemented in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure.

In the present descriptions, in expressing an aspect wherein some member is disposed on the other member, when described as merely "above" or "below", unless otherwise stated, it includes both of the following cases: a case wherein some member is disposed directly on or directly below the other member so as to be in contact with the other member, and a case wherein some member is disposed on the upper side or the lower side of the other member via yet another member. Also, in the present descriptions, on the occasion of expressing an aspect wherein some member is disposed on the surface of the other member, when described as merely "on the surface", unless otherwise stated, it includes both of the following cases: a case wherein some member is disposed directly on or directly below the other member so as to be in contact with the other member, and a case wherein some member is disposed on the upper side or the lower side of the other member via yet another member.

### A. Decorative sheet

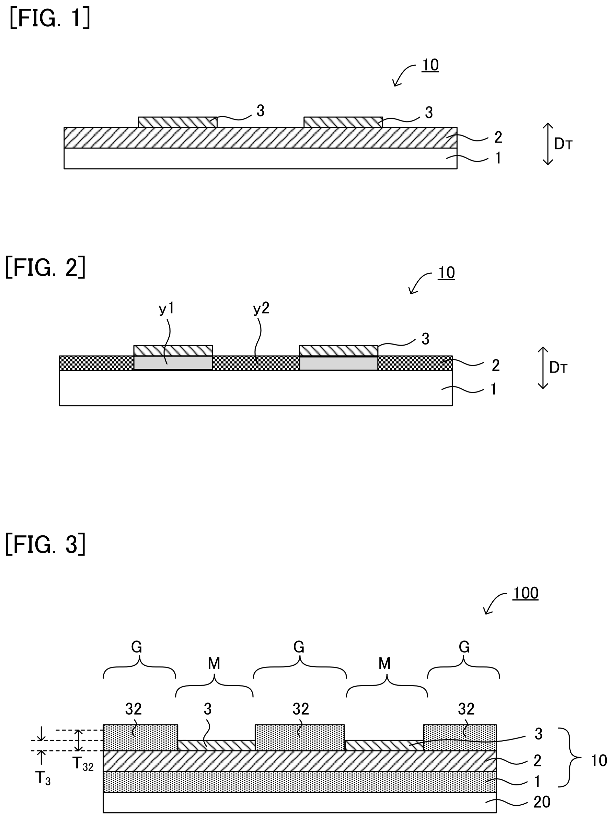

The decorative sheet in the present disclosure will be hereinafter described in detail. FIG. 1 is a schematic cross-sectional view exemplifying the decorative sheet of the present disclosure. The decorative sheet 10 shown in FIG. 1 is a decorative sheet used for a production of a resin-impregnated decorative plate, and comprises: a porous substrate 1; a design layer 2; and a release layer formed in a pattern 3, in this order in a thickness direction D_{T}. In the present disclosure, the 60° gloss value of the release layer 3 is 10 or less; the pure water contact angle of the release layer 3 is 85° or more; and the Spc (arithmetic average curvature at mountaintop point) of the release layer 3 is 80 mm⁻¹ or more.

The release layer includes, for example, a matting agent and a releasing agent. Here, examples of the approaches to improve the peeling property of the release layer, with respect to the cured resin layer may include increasing the content of the releasing agent; decreasing the content of the matting agent; decreasing the particle size of the matting agent; and increasing the thickness of the release layer. However, according to these approaches, the matte feel is decreased and the gloss matte designability is decreased. Meanwhile, according to the approaches such as reducing the content of the releasing agent; increasing the content of the matting agent; increasing the particle size of the matting agent; and reducing the thickness of the release layer, although the gloss matte designability is improved, the peeling property is decreased. In this way, since there is a trade-off relationship between the peeling property of the release layer with respect to the cured resin layer and the gloss matte designability, it is difficult to sufficiently control the above two functions only by composition or structure. Further, since there is a pressurizing step in the procedure of producing the resin-impregnated decorative plate, even if the release layer has a sufficient matte feeling in the state of the decorative sheet, the matte feeling may be lost after the pressurizing step. Therefore, there is still room for consideration in the design of the decorative sheet having a stable balance of the two functions.

The inventors of the present application found that by controlling the respective parameters of the 60° gloss value of the release layer, pure water contact angle, and Spc (arithmetic average curvature at mountaintop point) to predetermined ranges, it is possible for the release layer to achieve both the peeling property with respect to the cured resin layer and the gloss matte designability together with the cured resin layer.

### 1. Release layer

The release layer in the present disclosure is disposed on a surface of the design layer that is opposite side to the porous substrate, and it is formed in a pattern. In the region including the design layer on the porous substrate, at least a part of the release layer may be disposed on the surface of the design layer that is opposite side to the porous substrate; and in the region not including the design layer on the porous substrate, the porous substrate and release layer may be in contact.

### I. Properties

The 60° gloss value of the release layer in the present disclosure is 10 or less; the pure water contact angle of the release layer is 85° or more; and the Spc (arithmetic average curvature at mountaintop point) of the release layer is 80 mm⁻¹ or more. With the release layer wherein the 60° gloss value, the pure water contact angle and the Spc are respectively adjusted to the predetermined ranges, the cured resin layer can be peeled off selectively, and a gloss matte design, by the gloss difference from the cured resin layer, can be exhibited.

### (1) 60° gloss value

The 60° gloss value of the release layer in the present disclosure is usually 10 or less, preferably 6.5 or less, more preferably 5.5 or less, and further preferably 4.0 or less. When the 60° gloss value is in the range described above, since the release layer imparts the matte tone design feeling, the gloss matte tone design feeling can be expressed. Also, the 60° gloss value is, for example, 0.5 or more, preferably 1.0 or more, more preferably 1.2 or more, and further preferably 2.0 or more.

In the present disclosure, the 60°gloss value of the release layer, is the specular glossiness at 60° measured according to Method 3 of JIS Z 8741:1997, and is the value measured by the following method.

Disposing a decorative sheet so that the release layer side is on the upper side, and from the release layer side, and using a gloss meter, the specular glossiness at 60° is measured according to Method 3 of JIS Z 8741:1997. The 60° gloss value of the release layer is an average value of the measured value at arbitrary 10 locations. At each measurement point, the measurement is carried out after confirming that the release layer is at the center of the measurement region of the gloss meter, and that the ratio of the area of the release layer is 30% or more and preferably 50% or more of the area of the measurement region. For the specific method for this, the method described in Examples may be employed.

The 60° gloss value of the release layer can be adjusted by the average particle size of the matting agent, the content of the matting agent, and the thickness of the release layer. For example, the 60° gloss value can be reduced by reducing the thickness of the release layer. For example, by increasing the content of the matting agent, the 60° gloss value can be reduced. For example, by increasing the average particle size of the matting agent, the 60° gloss value can be reduced.

### (2) Pure water contact angle

The pure water contact angle of the release layer in the present disclosure is usually 85° or more, preferably 90° or more, more preferably 100° or more, and further preferably 110° or more. When the pure water contact angle of the release layer is in the above range, the peeling property of the cured resin layer is improved. Also, the fouling resistance is improved. Meanwhile, the pure water contact angle of the release layer is, for example, 130° or less, and preferably 125° or less.

In the present disclosure, the pure water contact angle of the release layer is the value obtained by measuring according to the following method. In other words, the decorative sheet is disposed still on a horizontal surface so that the release layer is the top surface. Then, a water droplet (pure water, 2.0 µL) is dripped onto the horizontal surface, on the release layer, from the perpendicular direction. At this time, the water droplet is not dripped on the boundary between the design layer and the release layer, but is dripped so that all the water droplets come into contact with the release layer. After dripping the droplet, wait for one second and the contact angle between the release layer and the pure water is measured with a contact angle meter. The above measurement is carried out at arbitrary 10 locations, and the average value thereof is regarded as the pure water contact angle.

The pure water contact angle can be adjusted by the content of the releasing agent, and the thickness of the release layer. For example, by increasing the content of the releasing agent, the pure water contact angle can be increased. For example, by increasing the thickness of the release layer, the pure water contact angle can be increased.

### (3) Spc (arithmetic average curvature at mountaintop point)

In the release layer in the present disclosure, the Spc (arithmetic average curvature at mountaintop point) is usually 80 mm⁻¹ or more, preferably 100 mm⁻¹ or more, more preferably 120 mm⁻¹ or more, and further preferably 150 mm⁻¹ or more. When the Spc of the release layer is in the range described above, the matte feeling of the surface is not lost even after the heating and pressurizing step, and the gloss matte tone design feeling can be expressed. Meanwhile, the Spc (arithmetic average curvature at mountaintop point) is preferably 300 mm⁻¹ or less, and more preferably 200 mm⁻¹ or less.

The Spc (arithmetic average curvature at mountaintop point) is one of the three-dimensional surface property parameters specified in ISO 25178, and is the average curvature (average sharpness) of the tip portion of the mountaintops obtained from the arithmetic average value of the curvature radius of the mountaintops (mountaintop points) of the location classified as a mountain (convex portion) in the shape image included in the reference region. Therefore, the Spc (arithmetic average curvature at mountaintop point) is an inverse number (mm⁻¹) of the radius (mm).

The higher the value of Spc (arithmetic average curvature at mountaintop point), the greater the curvature of the tip portion of the mountaintop (convex portion) (the curvature radius that is the inverse number is smaller, and the shape of the tip portion becomes sharper). Meanwhile, the lower the value of Spc (arithmetic average curvature at mountaintop point), the smaller the curvature of the mountaintop point (the tip point of the convex portion) (the curvature radius that is the inverse number is larger, and the shape of the tip portion becomes dull).

In the present disclosure, the Spc (arithmetic average curvature at mountaintop point) of the release layer is an average value of the measured value measured under the following conditions at arbitrary 10 locations, on the surface of the release layer of the decorative sheet, using a laser microscope from Keyence Corporation, selecting the measurement portions so that all the measurement portions are in the release layer.

### (Measurement conditions)

Objective lens: 5-fold
Laser wavelength: 661 nm
Area of measurement region at each point: 500 µm × 500 µm.

For example, the Spc can be adjusted by the average particle size of the matting agent. Specifically, the Spc can be increased by increasing the average particle size of the matting agent. Also, the Spc can be increased by increasing the content of the matting agent.

### II. Composition

### (1) Resin component

The release layer includes a resin component. The resin component is typically a cured product (cross-linked structure) of a curable resin X. Meanwhile, the resin component may be thermoplastic resin. Particularly, the release layer preferably includes a cured product of a curable resin X. This is because a release layer with good wear resistance can be obtained. Also, when the release layer includes the cured product of the curable resin X, peeling property with respect to the cured resin layer is improved.

Examples of the curable resin X may include ionizing radiation curable resins and thermosetting resins. Examples of the ionizing radiation curable resin may include electron beam curable resins, and ultraviolet curable resins.

The ionizing radiation curable resin (ionizing radiation curable compound) are not limited to as long as it is material that generates cross-linking polymerization reaction by irradiation of ionizing radiation and changes into a three-dimensional polymer structure. Examples of the ionizing radiation curable resin may include prepolymers, oligomers and monomers, including polymerizable unsaturated bonds or epoxy groups in the molecule, capable of being cross-linked by irradiation of ionizing radiation. In the present disclosure, one type of the ionizing radiation curable resin may be used alone, and two types or more may be used in a combination. Particularly, as the ionizing radiation curable resin, at least one of a polyfunctional monomer and oligomer is preferably used.

Examples of the ionizing radiation curable resin may include (meth)acrylate based resins, such as urethane(meth)acrylates, ester(meth)acrylates and epoxy(meth)acrylates; silicon based resins such as siloxane; ester based resins; and epoxy based resins. The (meth)acrylate based resin refers to an acrylate based resin or a methacrylate based resin.

The weight average molecular weight of the ionizing radiation curable resin is, for example, 500 or more and 80,000 or less, and may be 1,000 or more and 50,000 or less. The weight average molecular weight is a value measured by gel permeation chromatography (GPC) method, using polystyrene as the reference material.

As the ionizing radiation curable resin, at least a polyfunctional monomer or oligomer, with a weight average molecular weight of 500 or more, is preferably included. Examples of such polyfunctional monomer or oligomer may include (meth)acrylate based resins such as dipentaerythritol hexa(meth)acrylate, dipentaerythritol penta(meth)acrylate, urethane(meth)acrylate, ester(meth)acrylate, and epoxy(meth)acrylate.

Meanwhile, examples of the thermosetting resins may include unsaturated ester based resins, urethane based resins (including two-liquid curable type polyurethanes), epoxy based resins, amino-alkyd based resins, phenolic based resins, urea based resins, diallylphthalate based resins, melamine based resins, guanamine based resins, melamine urea co-condensation based resins, and silicon based resins and siloxane based resins.

### (2) Matting agent

The release layer preferably includes a matting agent. Examples of the matting agent may include inorganic particles and synthetic resin particles. Examples of such inorganic particles may include silica, alumina, calcium carbonate, magnesium carbonate, calcium sulfate, barium sulfate, and kaolin. Examples of the synthetic resin particles may include acrylic beads, urethane beads, nylon beads, silicone beads, silicone rubber beads, polycarbonate beads, and polyolefin wax (such as polypropylene wax, polyethylene wax).

The average particle size of the matting agent is, for example, 0.3 µm or more and 10 µm or less, may be 0.5 µm or more and 7 µm or less, and may be 1 µm or more and 5 µm or less. The average particle size is D50 in the volume-based particle size distribution measured by a laser diffraction scattering method.

The content of the matting agent is preferably 5 parts by mass or more, more preferably 8 parts by mass or more, and particularly preferably 10 parts by mass or more, with respect to 100 parts by mass of the release layer. The 100 parts by mass of the release layer means that the total solid content of the release layer is 100 parts by mass. Also, the content of the matting agent is preferably 20 parts by mass or less, more preferably 18 parts by mass or less, and particularly preferably 15 parts by mass or less, with respect to 100 parts by mass of the release layer.

### (3) Releasing agent

The release layer may include a releasing agent. The peeling property is improved by adding the releasing agent. Examples of the releasing agent may include silicone based releasing agents such as silicone oil; wax based releasing agents such as polyolefin wax; and fluorine based releasing agents. Among the above, silicone oil is preferable. This is because it has excellent heat resistance in the heating and pressurizing step. The silicone oils may be reactive silicone oils, and may be non-reactive silicone oils, and the reactive silicone oils are preferable. The reason therefor is to further improve the heat resistance.

Among the modified silicone oil to which an organic group is introduced to the side chain or at the terminal, the reactive silicone oil refers to one that is reactive due to the behavior of the introduced organic group. Specific examples of the reactive silicone oil may include, in side chain-type modified silicone oils, both-terminal-type modified silicone oils, one-terminal-type modified silicone oils and side-chain both-terminal-type modified silicone oils, ones wherein the introduced organic group is amino-modified, epoxy-modified, mercapto-modified, carboxyl-modified, carbinol-modified, phenol-modified, methacryl-modified, and dissimilar functional group-modified. These reactive silicone oils may be used alone, and two or more types may be used as a mixture.

The non-reactive silicone oil is not particularly limited as long as it is a silicone oil not including a reactive functional group such as amino group, epoxy group, mercapto group, carboxy group, hydroxy group, (meth)acryloyl group, and allylic group. Examples of the non-reactive silicone oil may include polyether modified silicone oils, aralkyl modified silicone oils, fluoroalkyl modified silicone oils, long-chain alkyl modified silicone oils, higher fatty acid ester modified silicone oils, higher fatty acid amide modified silicone oils, and phenyl modified silicone oils, besides the silicone oils including polysiloxanes. These non-reactive silicone oils may be used alone, and two or more types may be used as a mixture.

The content of the releasing agent is, for example, 1 part by mass or more and 10 parts by mass or less, preferably 2 parts by mass or more and, 9 parts by mass or less, and more preferably 3 parts by mass or more and, 8 parts by mass or less, with respect to 100 parts by mass of the release layer.

Also, the release layer may be colorless, and may be colored. In the latter case, the release layer preferably includes a colorant. As for the colorant, those similar to the colorant used in the design layer, which will be described below, can be used.

If necessary, the release layer may include an additive such as ultraviolet absorbers, infrared absorbers, light stabilizers, polymerization inhibitors, crosslinkers, antistatic agents, antioxidants, leveling agents, coupling agents, plasticizers, antifoaming agents, fillers, thermal radial generating agents, and aluminum chelating agents. By adding the ultraviolet absorber or light stabilizer, the weather resistance of the release layer can be improved.

### III. Thickness and ratio

The thickness of the release layer is not particularly limited, and is, for example, 0.1 µm or more and 20 µm or less, preferably 0.3 µm or more and 10 µm or less, and more preferably 0.5 µm or more and 8 µm or less. As the thickness T₃ of the release layer 3 show in FIG. 3, the thickness of the release layer refers to the thickness of the portion that does not permeate into the design layer 2 side, and protrudes from the surface of the design layer 2 that is opposite to the substrate 1. Also, in the release layer, viewing the decorative sheet from the pattern thickness direction, when the area of the release layer is regarded as S₁, and the area of the porous substrate is regarded as S₂, the ratio (S₁/S₂) of S₁ with respect to S₂ is, for example, 5% or more, and may be 10% or more. Meanwhile, S₁/S₂ is, for example, 80% or less, may be 70% or less, and may be 60% or less.

### IV. Method for forming

The release layer can be obtained by, for example, applying an ink for forming a release layer, including curable resin X, to the surface of the design layer that is opposite to the porous substrate, and curing thereof. Since a part of the ink for forming a release layer permeates into the porous substrate, as described in the Examples later, the porous property of the porous substrate influences the pure water contact angle, 60° gloss value and Spc. Also, as described in the Examples later, the composition (for example, the ratio of the weather resistant agent such as light stabilizers and ultraviolet absorbers) of the ink for forming a release layer mainly influences the 60° gloss value and Spc. In the present disclosure, good peeling property and good gloss matte designability can be obtained by adjusting the pure water contact angle, 60° gloss value and Spc in the predetermined range, in view of these influences.

When the ink for forming a release layer includes an electron beam curable resin as the curable resin X, a cured product of the electron beam curable resin is usually obtained by irradiating an electron beam. Examples of the electron beam source may include various electron beam accelerators such as Cockcroft-Walton type, Van de Graaff type, resonant transformer type, insulated core transformer type, linear type, dynamitron type, and high frequency type. The energy of the electron beam is, for example, 100 kV or more and 1000 kV or less, and may be 100 kV or more and 300 kV or less. The irradiance level of the electron beam is, for example, 2 Mrad or more and 15 Mrad or less.

When the ink for forming a release layer includes an ultraviolet curable resin as the curable resin X, a cured product of the ultraviolet curable resin is usually obtained by irradiating ultraviolet rays. Examples of the ultraviolet ray source may include an ultra-high pressure mercury lamp, a high pressure mercury lamp, a low pressure mercury lamp, a carbon arc lamp, a black light fluorescent lamp, and a metal halide lamp. The wavelength of the ultraviolet ray is, for example, 190 nm or more and 380 nm or less.

When the ink for forming a release layer includes a thermosetting resin as the curable resin X, a cured product of the thermosetting resin is usually obtained by heating. The heating temperature is appropriately set according to the type of the thermosetting resin. The ink for forming a release layer may include curing agents and polymerization accelerators such as cross-linking agents and polymerization initiators, along with the thermosetting resin. Examples of the curing agent may include isocyanates, organosulfonates, organoamines, peroxides (such as methyl ethyl ketone peroxide), and radical initiators (azoisobutyl nitrile).

The ink for forming a release layer may include solvents as necessary. Examples of the solvent may include water; hydrocarbon compounds such as toluene and xylene; alcoholic compounds such as methanol, ethanol and methyl glycol; ketone compounds such as acetone and methyl ethyl ketone; ester compounds such as methyl formate and ethyl acetate; nitrogen containing compounds such as N-methylpyrrolidone and N,N-dimethylformamide; ether compounds such as tetrahydrofuran and dioxane; halogenated hydrocarbon compounds such as methylene chloride and chloroform; and dimethylsulfoxide.

### V. Others

In the production process of the resin-impregnated decorative plate which will be described later, the release layer has peeling property with respect to the cured resin layer disposed between the release layer and the release film. By having such peeling property, in the resin-impregnated decorative plate 100 shown in FIG. 3 produced using the decorative sheet in the present disclosure, the release layer 3 imparts a matte tone design feeling, and the cured resin layer 32 imparts a gloss tone design feeling, so that a gloss-matte tone design feeling can be expressed.

Also, as shown in FIG. 2, the release layer 3 is preferably disposed so that it is aligned with the pattern of the design layer 2. "Aligned with" means that the shape and position of the two patterns of interest roughly conform with each other. Specifically, it means the condition wherein the shape and position of the pattern of the release layer and at least a part of the pattern constituting the pattern of the design layer match to the extent that it does not impair the sense of realism and luxury. In FIG. 2, the design layer 2 includes the pattern layer y1 and pattern layer y2, and the release layer 3 aligns with the pattern layer y1. By disposing the pattern of the release layer so as to align with the pattern of the design layer, a high texture can be obtained. Meanwhile, the release layer may be disposed so that it is not aligned with the pattern of the design layer.

### 2. Design layer

The design layer in the present disclosure is disposed on one surface of the porous substrate. The design layer preferably includes a pattern.

Examples of the pattern of the design layer may include organic patterns, inorganic patterns and abstract patterns. The organic pattern refers to a pattern derived from the life activities of living organisms such as animals and plants. Also, the inorganic pattern refers to a pattern that does not correspond to the organic pattern. Also, the abstract pattern refers to a pattern that interprets an object (for example, a figure that exists in the natural world) in an abstract manner and does not express an obvious shape. Examples of the organic pattern may include wood-grain pattern, leather pattern, floral pattern, and botanical pattern. Examples of the inorganic pattern may include stone-grain patterns, concrete patterns, sand-grain patterns, fabric-grain patterns, metal patterns, tiling patterns, and brick patterns. Examples of the abstract pattern may include flickering patterns (for example, flickering ink pattern), smoke patterns, and marble patterns.

The design layer includes, for example, a pattern layer. Also, the design layer may include a solid layer on the porous substrate side than the pattern layer. In the present disclosure, the patter layer means a layer formed partially (especially in a pattern) on one surface of the porous substrate. Also, the solid layer means a layer formed over the entire surface of one surface of the porous substrate.

The design layer includes, for example, a colorant and a resin component. Examples of the colorant may include inorganic pigments such as carbon black, titanium white, zinc flower, Bengal red, ultramarine blue and cadmium red; organic pigments such as azo pigments, rake pigments, anthraquinone pigments, quinaclidone pigments, phthalocyanine pigments, isoindrinone pigments and dioxadine pigments; metal powder pigments such as aluminum powder and bronze powder; pearlescent pigments such as titanium oxide-coated mica and bismuth oxychloride; fluorescent pigments; and luminous pigments. Dyes may be used as the colorant.

Examples of the resin component may include (meth)acrylic based resins, ester urethane based resins, acrylamide based resins, ethylene oxide based resins, N-vinylpyrrolidone based resins, ester based resins, amide based resins, vinyl acetate based resins, vinyl chloride based resins, urethane (meth)acrylic based resins, natural rubbers and synthetic rubbers. Among them, (meth)acrylic based resins, and urethane(meth)acrylic based resins are preferable.

The resin component preferably includes a resin including at least one or more polar group of hydroxy group, amino group and carboxy group. By including the resin including the polar group described above, the impregnation property of the curable resin Y, with respect to the porous substrate, is improved.

As the polar group, the resin including a polar group includes at least one or more of hydroxy group (-OH), amino group (-NH₂), and carboxy group (-COOH). These polar groups may be ionized and stabilized, for example, due to the influence of solvents and other functional groups. Therefore, the "hydroxy group (-OH)" is a concept containing "-O⁻" in the ionized state, the "amino group (-NH₂)" is a concept containing "-NH₃⁺" in the ionized state, and the "carboxy group (-COOH)" is a concept containing "-COO⁻" in the ionized state.

Examples of the resin including at least one or more of hydroxy group (-OH), amino group (-NH₂) and carboxy group (-COOH) may include aqueous proteins such as casein; cellulose derivatives represented by, for example, cellulose, acetylcellulose, nitrocellulose, hydroxypropyl cellulose and carboxymethylcellulose; polyvinyl alcohol derivatives such as polyvinyl alcohol and polyvinyl butyral resins; amino based resins such as melamine resins; (meth) acrylic acid based resins; phenolic resins; acrylic polyols; and natural polymers (such as polynucleotides, polypeptides, and polysaccharides).

As the resin including the polar group, the design layer in the present disclosure preferably includes at least one or more of casein, melamine based resin, polyvinyl alcohol, polyvinyl alcohol derivative, cellulose and cellulose derivative, and more preferably includes casein. As the casein, α-casein, β-casein, γ-casein, or a mixture thereof may be used. Also, as the casein, the derivatives represented by casein sodium and casein ammonium can be used alone or in a combination.

The ratio of the resin including the polar group described above, with respect to the resin components included in the design layer is, for example, 20% by mass or more, may be 30% by mass or more, may be 40% by mass or more, and may be 50% by mass or more. Meanwhile, the ratio of the resin including the polar group is, for example, 100% by mass or less, and may be 90% by mass or less. When the content of the resin including the polar group is in the above range, the permeation of the ink of the release layer into the porous substrate may further be suppressed, without inhibiting the permeation of the curable resin Y with respect to the porous substrate.

The design layer may include additives such as fillers (such as silica), extender pigments (such as organic beads), neutralizers and surfactants, if necessary. The thickness of the design layer is not particularly limited, and it is, for example, 0.1 µm or more and 20 µm or less.

Examples of the method for forming a design layer may include applying methods using an ink for forming a design layer including a colorant, a binder resin, and a solvent (or a dispersant). For example, a design layer is obtained by coating one surface of a porous substrate with the ink for forming a design layer, and drying.

Examples of the solvent (or dispersant) may include petroleum based organic solvents such as hexane, heptane, octane, toluene, xylene, ethylbenzene, cyclohexane and methylcyclohexane; ester based organic solvent such as ethyl acetate, butyl acetate, 2-methoxyethyl acetate and 2-ethoxyethyl acetate; alcoholic based organic solvents such as methyl alcohol, ethyl alcohol, normal propyl alcohol, isopropyl alcohol, isobutyl alcohol, ethylene glycol and propylene glycol; ketone base organic solvents such as acetone, methyl ethyl ketone, methyl isobutyl ketone and cyclohexanone; ether based organic solvents such as diethyl ether, dioxane, and tetrahydrofuran; chloride based organic solvents such as dichloromethane, carbon tetrachloride, trichloro ethylene and tetrachloro ethylene; and inorganic solvents such as water.

Examples of the method for application may include printing methods. Examples of the printing method may include gravure printing method, offset printing method, screen printing method, flexographic printing method, electrostatic printing method and inkjet printing method. Also, examples of the method for application for forming the solid layer may include various coating methods such as roll coating method, knife coating method, air knife coating method, die coating method, lip coating method, comma coating method, kiss coating method, flow coating method and dip coating method.

### 3. Porous substrate

The porous substrate in the present disclosure is a substrate into which curable resin Y is impregnated, during the production of the resin-impregnated decorative plate. Examples of the porous substrate may include permeable fibrous substrates. Examples of the permeable fibrous substrate may include paper, synthesized paper, non-woven fabric and woven fabric. Examples of the paper may include titanium paper, tissue paper, kraft paper, linter paper, paperboard, gypsum board paper, high-quality paper, coated paper, parchment paper, and Japanese paper. Also, vinyl wallpaper webs (paper dry laminated with polyvinyl chloride resin) can be used as the fibrous substrate. Other examples of the fibrous substrates may include non-woven or woven fabrics including inorganic fibers such as glass fibers, asbestos, potassium titanate fibers, alumina fibers, silica fibers and carbon fibers. Also, other examples of the fibrous substrate may include non-woven or woven fabrics including synthetic resin fibers such as polyester, vinylon, polyethylene and polypropylene. Among these porous substrates, titanium paper, tissue paper, kraft paper, coated paper, art paper, vegetable parchment paper, glassine paper, parchment paper, paraffin paper and Japanese paper are preferable in view of the impregnability of the curable resin Y. In particular, the titanium paper is preferable as the porous substrate because of its excellent impregnability of curable resin Y and excellent hiding property.

The porous substrate may be colored. For example, at the stage of production of the porous substrate, a colored porous substrate is obtained by blending a colorant. For example, when the porous substrate is paper, colored paper can be obtained by mixing a colorant at the papermaking stage. Examples of the colorant may include inorganic pigments such as titanium dioxide, carbon black, iron oxide; organic pigments such as phthalocyanine blue; and various dyes. Also, the content of the colorant is appropriately set according to the desired tint. Also, the porous substrate may include various additives such as fillers, frosting agents, foaming agents, flame retardants, lubricants, antistatic agents, antioxidants, ultraviolet absorber and light stabilizers, if necessary.

The basis weight of the porous substrate is not particularly limited, and is, for example, 40 g/m² or more and 150 g/m² or less. The thickness of the porous substrate is not particularly limited, and it is, for example, 50 µm or more and 170 µm or less. For example, in order to improve the close adhesiveness of the ink for forming the design layer, the design layer side surface of the porous substrate may be subjected to a corona discharge treatment.

### 4. Decorative sheet

The decorative sheet in the present disclosure is used for the production of a resin-impregnated decorative plate. The method for producing a resin-impregnated decorative plate, using the decorative sheet in the present disclosure will be described below.

### B. Resin-impregnated decorative plate

The resin-impregnated decorative plate in the present disclosure will be hereinafter described in detail. FIG. 3 is a schematic cross-sectional view exemplifying the resin-impregnated decorative plate in the present disclosure. The resin-impregnated decorative plate 100 shown in FIG. 3 comprises: a decorative sheet 10 including a porous substrate 1, a design layer 2, and a release layer 3 formed in a pattern, in this order in a thickness direction; a core substrate 20 disposed so as to face the porous substrate 1 in the decorative sheet 10; and a cured resin layer 32 disposed between patterns of the release layer 3, thicker than the release layer 3, and including a cured product of a curable resin Y, wherein the porous substrate includes the cured product of the curable resin Y; a pure water contact angle of the release layer 3 is in a predetermined range; and a Spc (arithmetic average curvature at mountaintop point) of the release layer 3 is in a predetermined range.

According to the resin-impregnated decorative plate in the present disclosure, since the pure water contact angle of the release layer is a predetermined value or more, and the Spc (arithmetic average curvature at mountaintop point) of the release layer is a predetermined value or more, the resin-impregnated decorative plate has the following features: the cured resin layer disposed at the position overlapping the release layer is easily peeled off; and the gloss matte designability between the release layer and cured resin layer is excellent.

### 1. Decorative sheet

The decorative sheet in the present disclosure comprises: a porous substrate, a design layer, and a release layer formed in a pattern, in this order in a thickness direction.

### (1) Release layer

In the resin-impregnated decorative plate in the present disclosure, the pure water contact angle of the release layer is usually 85° or more, preferably 90° or more, more preferably 100° or more, and further preferably 110° or more. When the pure water contact angle of the release layer of the resin-impregnated decorative plate is in the above range, the peeling property of the cured resin layer is improved. Also, the fouling resistance is improved. Meanwhile, the pure water contact angle of the release layer of the resin-impregnated decorative plate is, for example, 130° or less, and preferably 125° or less.

The pure water contact angle of the release layer of the resin-impregnated decorative plate is the value obtained by completely removing the cured resin layer remaining on the release layer to expose the release layer, and then, measuring by the method similar to the method for measuring a pure water contact angle of the release layer described in detail in "A. Decorative sheet" above. Examples of the method for removing the cured resin layer remaining on the release layer may include the method similar to the method of the cellophane tape resistance test in Examples.

The method for adjusting a pure water contact angle of the release layer is similar to the content described in detail in "A. Decorative sheet" above.

The Spc (arithmetic average curvature at mountaintop point) of the release layer in the resin-impregnated decorative plate is 10 mm⁻¹ or more, preferably 15 mm⁻¹ or more, more preferably 20 mm⁻¹ or more, further preferably 40 mm⁻¹ or more, and particularly preferably 60 mm⁻¹ or more. When the Spc of the release layer is in the range described above, since the release layer imparts the matte tone design feeling in the state of the resin-impregnated decorative plate, the gloss matte tone design feeling can be expressed. Meanwhile, the Spc (arithmetic average curvature at mountaintop point) of the release layer in the resin-impregnated decorative plate is, for example, 140 mm⁻¹ or less, preferably 120 mm⁻¹ or less, and more preferably 100 mm⁻¹ or less.

In the resin-impregnated decorative plate, the method for measuring and method for adjusting the Spc of the release layer are similar to the contents described in detail in "A. Decorative sheet" above.

The 60° gloss value of the release layer of the resin-impregnated decorative plate is preferably 10 or less, more preferably 8 or less, and particularly preferably 7.5 or less. When the 60° gloss value of the release layer is in the range described above, since the release layer imparts the matte tone design feeling, the gloss matte tone design feeling can be expressed. Meanwhile, the 60° gloss value of the release layer of the resin-impregnated decorative plate is, for example, 2.0 or more, and preferably 3.0 or more.

The method for measuring and method for adjusting the 60° gloss value of the release layer of the resin-impregnated decorative plate are similar to the contents described in detail in "A. Decorative sheet" above.

### (2) Porous substrate and design layer

The porous substrate and design layer in the present disclosure are similar to the contents described in detail in "A. Decorative sheet" above. Also, the porous substrate in the resin-impregnated decorative plate includes a cured product of a curable resin Y.

### 2. Cured resin layer

The resin-impregnated decorative plate in the present disclosure includes a cured resin layer disposed between patterns of the release layer, and thicker than the release layer. The 60° gloss value of the cured resin layer is preferably more than the 60° gloss value of the release layer. The reason therefor is to express the gloss matte tone design feeling. The 60° gloss value of the cured resin layer is, for example, 11 or more, may be 15 or more, and may be 20 or more. Meanwhile, the 60° gloss value of the cured resin layer is, for example, 60 or less, may be 55 or less, and may be 50 or less.

In the resin-impregnated decorative plate, the difference between the 60° gloss value of the release layer and the 60° gloss value of the cured resin layer is preferably 1.0 or more, and more preferably 3.0 or more. The reason therefor is to obviously obtain the gloss matte effect.

In the resin-impregnated decorative plate, the ratio (G32/G3) of the 60° gloss value G32 of the cured resin layer 32 with respect to the 60° gloss value G3 of the release layer 3 is preferably 1.2 or more, and more preferably 1.5 or more. The reason therefor is to obviously obtain the gloss matte effect.

The cured resin layer includes the cured product of the curable resin Y. Among them, as the curable resin Y, thermosetting resins are preferable. As the thermosetting resin, thermosetting type resins may be used widely. Examples of the thermosetting resin may include melamine based resins (melamine based resin precursors), melamine-urea co-condensate based resins, unsaturated polyester based resins, polyurethane based resin (including two-liquid curing type polyurethane), epoxy based resins, aminoalkyd based resins, phenolic based resins, urea based resins, diallylphthalate based resins, guanamine based resins, silicon based resins and polysiloxane based resins. Examples of the method for impregnating the thermosetting resin may include a method wherein a decorative sheet is immersed into a bath including thermosetting resin; a method wherein a decorative sheet is coated with thermosetting resin by a coater such as a kiss coater and a comma coater; and a method wherein thermosetting resin is sprayed onto a decorative sheet by a spray device or a shower device.

In the present disclosure, the thickness T₃₂ of the cured resin layer 32 is thicker than the thickness T₃ of the release layer 3. The convexoconcave feeling of the surface makes it easy to improve the designability of the surface. The thickness T₃₂ of the cured resin layer is not particularly limited, and is, for example, 1 µm or more, and may be 10 µm or more. Meanwhile, the thickness T₃₂ of the cured resin layer is, for example, 500 µm or less, and may be 300 µm or less. Also, the thickness T₃₂ of the cured resin layer may be less than 30 µm. By making the thickness T₃₂ thin, the workability, when the release film is peeled off from the cured resin layer, is improved. The thickness T₃₂ of the cured resin layer is may be 28 µm or less, may be 25 µm or less, and may be 20 µm or less.

In the present embodiment, the difference between the location of the top portion of the release layer and the location of the top portion of the cured resin layer (surface level difference of the resin-impregnated decorative plate) is preferably, for example, 0.5 µm or more and 45.0 µm or less, more preferably 2.0 µm or more and 35.0 µm or less, and further preferably 3.0 µm or more and 30.0 µm or less. Also, the difference may be 0.5 µm or more and 25 µm or less, may be 2.0 µm or more and 25 µm or less, and may be 3.0 µm or more and 20 µm or less.

### 3. Core substrate

The resin-impregnated decorative plate in the present disclosure includes a porous core substrate 20 on the porous substrate 1 side surface of the decorative sheet 10 (the surface of the decorative sheet 10 located on the porous substrate 1 side, based on the design layer 2). By including the core substrate, mechanical strength of the resin-impregnated decorative plate can be improved. Examples of the core substrate 20 may include phenol resin-impregnated paper. The phenol resin-impregnated paper is a paper obtained by, for example, impregnating phenolic resin into a kraft paper, that is a core paper, and drying it. The core substrate may include the cured product of the curable resin Y

### 4. Cured product of curable resin

The porous substrate in the present disclosure includes a cured product of a curable resin Y. The cured product of curable resin Y filled into the porous substrate; and the cured product of curable resin Y included in the cured resin layer are formed with the same curable resin Y, as described later. These cured products are, for example, a cured product of thermosetting resins.

In the resin-impregnated decorative plate in the present disclosure, the total light transmittance specified in JIS K7361-1:1997 is preferably 10% or less, more preferably 5% or less, and further preferably 1% or less.

### 5. Resin-impregnated decorative plate

The resin-impregnated decorative plate in the present disclosure is, for example, used by disposing thereof on the surface of a base member. Examples of the base member may include woody members, resin members, metal members, and ceramic members. Examples of the woody member may include wood single panel, plywood panel, particle board, and woody fiberboard. Examples of the wood used for the woody member may include cedar, hinoki cypress, pine, and lauan. Examples of the resin used for the resin member may include vinyl chloride based resins, (meth)acrylic based resins, ester based resins, styrene based resins, olefin based resins, acrylonitrile-butadiene-styrene based copolymers (ABS based resins), phenolic based resins, cellulose based resins, carbonate based resins, melamine based resins, and rubber. Examples of the metal used for the metal member may include iron, and aluminum. The material of the ceramic member may be ceramics such as glass and pottery, may be non-cement ceramic based materials such as gypsum, and may be non-pottery ceramic based materials such as ALC (lightweight aerated concrete).

Examples of the use application of the resin-impregnated decorative plate in the present disclosure may include construction materials and furniture. The construction material may be interior material, and may be exterior material. Examples of the construction material may include wall, floors, ceilings, doors, and shelves. Examples of furniture may include tables, desks and cabinets.

### C. Method for producing resin-impregnated decorative plate

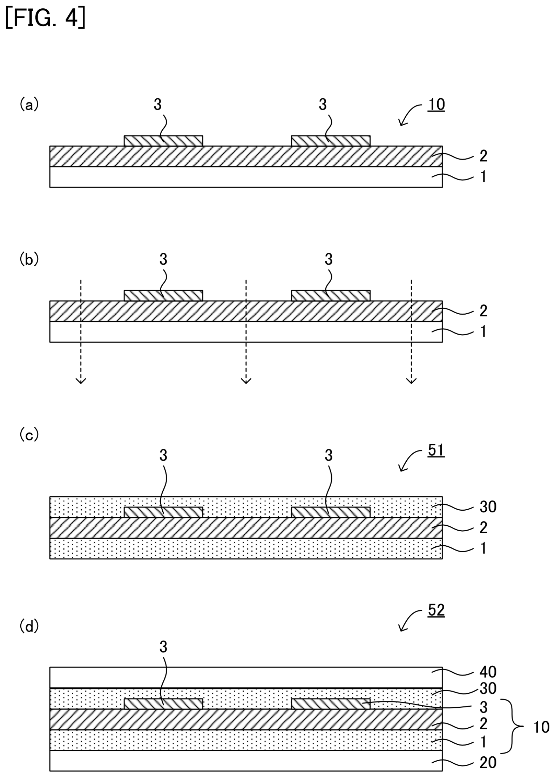

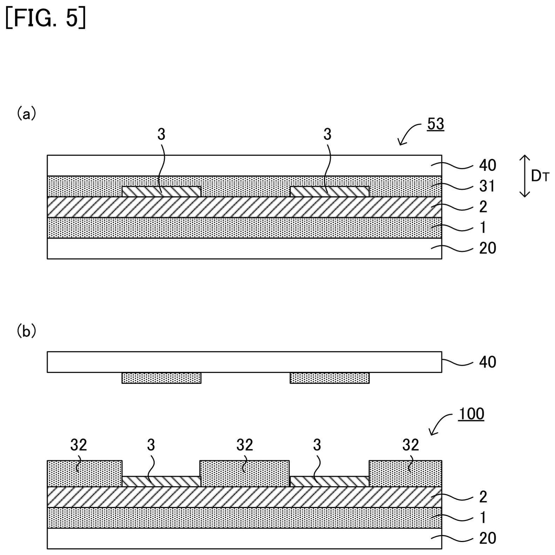

FIGS. 4(a) to (d) and FIGS. 5(a) and (b) are schematic cross-sectional views exemplifying the method for producing a resin-impregnated decorative plate in the present disclosure. The method for producing a resin-impregnated decorative plate in the present disclosure comprises: a preparing step of preparing the decorative sheet 10 described above (FIG. 4(a)); a stacked body forming step of forming a stacked body 52 (i) including a core substrate 20, the decorative sheet 10, a curable resin layer 30 including a curable resin Y, and a release film 40, in this order in a thickness direction, (ii) disposed so that a porous substrate 1 side surface of the decorative sheet 10 faces the core substrate 20, and (iii) the decorative sheet 10 is impregnated with the curable resin Y (FIG. 4(b) to FIG. 4(d)); a heating and pressurizing step of obtaining a cured stacked body 53 by heating and pressurizing the stacked body 52 to cured the curable resin Y while forming a cured resin layer 31 from the curable resin layer 30 (FIG. 5(a)); and a peeling step of removing the cured resin layer 31 disposed at a position overlapping with the release layer 3 in the thickness direction, while remaining the cured resin layer 31 disposed between patterns of the release layer 3, by peeling the release film 40 from the cured stacked body 53 (FIG. 5(b)).

### 1. Preparing step

The present step is a step of preparing the decorative sheet. The details of the decorative sheet are as described above.

### 2. Stacked body forming step

As shown in FIG. 4(d), the present step is a step of forming a stacked body 52 (i) including a core substrate 20, the decorative sheet 10, a curable resin layer 30 including a curable resin Y, and a release film 40, in this order in a thickness direction; wherein (ii) disposed so that a porous substrate 1 side surface of the decorative sheet 10 faces the core substrate 20; and (iii) the decorative sheet 10 is impregnated with the curable resin Y.

The method for forming such stacked body is not particularly limited. For example, as shown in FIG. 4(b), a decorative sheet 10 is impregnated with curable resin Y, covering the design layer 2 and release layer 3, and forming a curable resin layer 30 including curable resin Y, and a precursor stacked body 51 is obtained (FIG. 4(c)). Then, the release film 40 is disposed on the curable resin layer 30 side surface of the precursor stacked body, and further, the core substrate 20 is disposed on the precursor stacked body 51 that is opposite to the side including the release layer. Thereby, a stacked body 52 can be obtained.

The details of the core substrate and curable resin Y are as described above.

In the present process, for example, the decorative sheet is immersed into a curable resin composition including the curable resin Y. The decorative sheet is preferably dried after the immersion. At this time, a part of the curable resin may be cured to obtain a semi-cured condition.

The curable resin composition is a curable resin composition including curable resin Y. The proportion of the curable resin Y in the curable resin composition is preferably 50% by mass or more, may be more preferably 70% by mass or more, and further preferably 90% by mass or more. The curable resin composition may include, for example, water, alcohol or organic solvents as a solvent.

Examples of the release film may include films including polyester resins such as polyethylene terephthalate, and polybutylene terephthalate; polyolefin resins such as polyethylene and polypropylene; and acrylic resins. Also, the release film may have a peeling layer including a cured product of an ionizing radiation curable resin composition, on the surface facing the curable resin layer.

Another example of the method for forming a stacked body in the present step may be a method wherein a core substrate is disposed so as to face the porous substrate of the decorative sheet, while impregnating the core substrate and the porous substrate with curable resin Y, the design layer and the release layer are covered, and a curable resin layer including the curable resin Y is formed. Then, a release film 40 is disposed on the curable resin layer side surface. Thereby, a stacked body can be obtained.

### 3. Heating and pressurizing step

The present step is a step of obtaining a cured stacked body 53 by heating and pressurizing the stacked body 52 to cure the curable resin Y, and forming a cured resin layer 31 from the curable resin layer 30.

The heating temperature is, for example, 90°C or more and 160°C or less. Also, the heating time is, for example, 30 seconds or more and 30 minutes or less.

### 4. Peeling step

The present step is a step of removing the cured resin layer 31 disposed at a position overlapping with the release layer 3 in the thickness direction, and remaining the cured resin layer 31 disposed between patterns of the release layer 3 by peeling the release film from the cured stacked body 53. Thereby, a resin-impregnated decorative plate 100 comprising: a porous substrate 1; a design layer 2 disposed on one surface of the porous substrate 1; a release layer 3 disposed in a pattern on a surface of the design layer 2 that is opposite side to the porous substrate 1; and a cured resin layer 32 disposed between patterns of the release layer 3 of the decorative sheet.

The Spc and pure water contact angle of the release layer of the resin-impregnated decorative plate obtained by the method for producing such resin-impregnated decorative plate can be set to the ranges described in "B. Resin-impregnated decorative plate" above. Therefore, a resin-impregnated decorative plate having the following features can be produced: the cured resin layer disposed at the position overlapping the release layer is easily peeled off; and the gloss matte designability between the release layer and cured resin layer is excellent.

The present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

### [Example 1]

### (Production of decorative sheet)

As a porous substrate, a paper substrate (titanium base paper for construction materials PM-77P from KJ SPECIALTY PAPER Co., Ltd., basis weight of 80 g/m²) was prepared. By measuring according to JIS-P8252, the ash content of the paper substrate was 26%. By the gravure printing method using the following printing ink, a design layer (pattern layer) having a thickness of 2 µm was partially stacked on the paper substrate to produce a stone-grain pattern design. Further, a release layer having a thickness of 2 µm was formed by stacking the following ink for forming a release layer 1, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Printing Ink>

- Pigments (azo based, quinacridone based, carbon black, and so on) 10 parts by mass
- Casein/acrylic based resin 10 parts by mass
- Water 70 parts by mass
- Dipropyl glycol 5 parts by mass
- Isopropyl alcohol 5 parts by mass

### <Ink for forming release layer 1>

- Ionizing radiation curable monomer (ARONIX M-400 from Toagosei Co., Ltd.) 48 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 2 µm) 8 parts by mass (13.3 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

The impregnated decorative sheet was stacked on a core substrate including 3 sheets of phenolic resin-impregnated core paper with a basis weight of 245 g/m² (obtained by impregnating core kraft paper with a liquid uncured resin composition made from phenolic resin) produced by impregnating the kraft paper with the phenolic resin liquid, further, the following release film was stacked on the impregnated decorative sheet so that the peeling layer of the release film was in contact with the printed surface of the impregnated decorative sheet, and a stacked body was obtained.

### (Production of release film)

The easy adhesive surface of a PET film (Cosmo Shine (registered trademark) A4160 from Toyobo Co., Ltd.) having a thickness of 50 µm was coated with a coating solution including 100 parts by mass of an ionizing radiation curable monomer (Aronix M-350 from Toagosei Ltd.), 2 parts by mass of a reactive silicone (X-22-164B from Shin-Etsu Chemical Co., Ltd.), 8 parts by mass of silica particles (product name "Sylysia 450" from Fuji Silysia Chemical Ltd., average particle size: 8.0 µm), and 50 parts by mass of ethyl acetate at an amount of 5 g/m² (dried), and electron beams were irradiated at 5 Mrad and an accelerating voltage of 165 kV to cure, thereby produced a release film including a peeling layer.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 1 was obtained. Incidentally, when the release film was peeled and removed from the cured stacked body, the cured resin layer on the release layer, among the cured resin layer, was removed together with the release film, and the cured resin layer formed in the position where there is no release layer was left.

### [Example 2]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 2, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 2>

- Ionizing radiation curable monomer (ARONIX M-400 from Toagosei Co., Ltd.) 50.6 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 2 um) 5.4 parts by mass (9.0 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 2 was obtained.

### [Example 3]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 3, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 3>

- Ionizing radiation curable monomer (ARONIX M-400 from Toagosei Co., Ltd.) 45.4 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 2 µm) 10.6 parts by mass (17.7 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 3 was obtained.

### [Example 4]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 4, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 4>

- Ionizing radiation curable monomer (ARONIX M-400 from Toagosei Co., Ltd.) 50.6 parts by mass
- Reactive silicone (X-22-164B from Shin-Etsu Chemical Co., Ltd.) 1.4 parts by mass (2.3 parts by mass with respect to 100 parts by mass of the total solid components)
- Silane coupling-treated silica (particle size of 2 µm) 8 parts by mass (13.3 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 4 was obtained.

### [Example 5]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 5, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 5>

- Ionizing radiation curable monomer (ARONIX M-400 from Toagosei Co., Ltd.) 46.6 parts by mass
- Reactive silicone (X-22-164B from Shin-Etsu Chemical Co., Ltd.) 5.4 parts by mass (9.0 parts by mass with respect to 100 parts by mass of the total solid components)
- Silane coupling-treated silica (particle size of 2 µm) 8 parts by mass (13.3 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 5 was obtained.

### [Example 6]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 6, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 6>

- Ionizing radiation curable monomer (ARONIX M-400 from Toagosei Co., Ltd.) 50.6 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 5 µm) 5.4 parts by mass (9.0 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 6 was obtained.

### [Example 7]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 7, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 7>

- Ionizing radiation curable monomer (ARONIX M-400 from Toagosei Co., Ltd.) 45.4 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 1 µm) 10.6 parts by mass (17.7 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 7 was obtained.

### [Example 8]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 6 µm was formed by stacking the following ink for forming a release layer 8, on the pattern layer, so as to align with the previously provided pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 8>

- Ionizing radiation curable monomer (ARONIX M-400 from Toagosei Co., Ltd.) 45.4 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 2 µm) 10.6 parts by mass (17.7 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 8 was obtained.

### [Comparative Example 1]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 9, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 9>

- Ionizing radiation curable monomer (ARONIX M-400 from Toagosei Co., Ltd.) 53.4 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 2 µm) 2.6 parts by mass (4.3 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Comparative Example 1 was obtained.

### [Comparative Example 2]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 10, on the pattern layer, so as to align with the pattern layer, and irradiating electron beams of 3 Mrad at an accelerating voltage of 165 kV. Thereby, a decorative sheet including a paper substrate, a design layer and a release layer, stacked in this order, was produced.

### <Ink for forming release layer 10>

- Ionizing radiation curable monomer (ARONIX M-400 from Toagosei Co., Ltd.) 51.4 parts by mass
- Reactive silicone (X-22-164B from Shin-Etsu Chemical Co., Ltd.) 0.6 parts by mass (1.0 parts by mass with respect to 100 parts by mass of the total solid components)
- Silane coupling-treated silica (particle size of 2 µm) 8.0 parts by mass (13.3 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Comparative Example 2 was obtained.

### [Comparative Example 3]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 11, on the pattern layer, so as to align with the pattern layer, and irradiating electron beams of 3 Mrad at an accelerating voltage of 165 kV. Thereby, a decorative sheet including a paper substrate, a design layer and a release layer, stacked in this order, was produced.

### <Ink for forming release layer 11>

- Ionizing radiation curable monomer (ARONIX M-400 from Toagosei Co., Ltd.) 48 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 5 µm) 8 parts by mass (13.3 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet.

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Comparative Example 3 was obtained.

### [Comparative Example 4]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 12, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 12>

- Ionizing radiation curable monomer (ARONIX M-400 from Toagosei Co., Ltd.) 48 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 1 µm) 8 parts by mass (13.3 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet.

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Comparative Example 4 was obtained.

### [Comparative Example 5]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 6 µm was formed by stacking the ink for forming a release layer 1, on the pattern layer, so as to align with the previously provided pattern layer, and irradiating electron beams of 3 Mrad at an accelerating voltage of 165 kV. Thereby, a decorative sheet including a paper substrate, a design layer and a release layer, stacked in this order, was produced.

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet.

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Comparative Example 5 was obtained.

### [Pure water contact angle of release layer of decorative sheet]

The pure water contact angle of the release layer of the decorative sheet obtained in Example 1 to Example 8 and Comparative Example 1 to Comparative Example 5 were measured by the following method. The decorative sheet was placed still on a horizontal surface so that the release layer was the top surface. Then, a water droplet (pure water, 2.0 µL) was dripped onto the horizontal surface, on the release layer, from the perpendicular direction. At this time, the water droplet was not dripped on the boundary between the design layer and the release layer, but was dripped so that all the water droplets came into contact with the release layer. After dripping the droplet, waited for one second and the contact angle between the release layer and the pure water was measured with a contact angle meter (full automatic contact angle meter DMo-702, Kyowa Interface Science Co., Ltd). The above measurement was carried out at arbitrary 10 locations, and the average value thereof was regarded as the pure water contact angle. The results are shown in Table 1 and Table 2. Incidentally, the pure water contact angle of the release layer of the resin-impregnated decorative plate can be measured by the method basically the same as one described above, and when the water droplets were dripped on the release layer, the water droplet was not dripped on the boundary between the cured resin layer and the release layer, but was dripped so that all the water droplets come into contact with the release layer.

### [60° gloss value of release layer of decorative sheet]

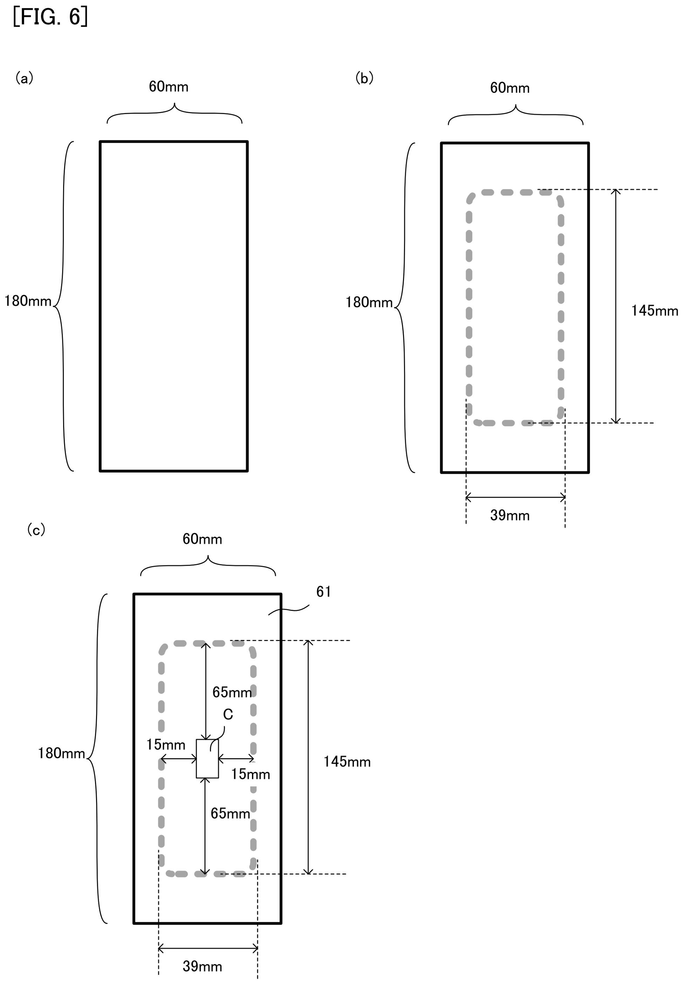

The 60° gloss value of the release layer of the decorative sheet obtained in Example 1 to Example 8 and Comparative Example 1 to Comparative Example 5 were measured by the following method. Disposing a decorative sheet so that the release layer side was on the upper side, and from the release layer side, and using a gloss meter ("Micro-tri-gloss (Cat. No 4563)" from BYK-Gardner GmbH), the specular glossiness at 60° was measured by the following method, according to Method 3 of JIS Z 8741:1997.
1) Paper (Ten Color <400> A4 black from Oji F-Tex Co., Ltd.) was prepared and cut out to a size of 180 mm × 60 mm as shown in FIG. 6(a).
2) the gloss meter was disposed so that it was on the cut out piece of paper, and the gloss meter was profiled with a pencil (dotted line frame in FIG. 6(b)).
3) As shown in FIG. 6(c), a hole C having a size of 15 mm × 9 mm was cut out in the center to produce a backing plate 61.
4) The produced backing plate was disposed on the measurement sample, cut-out portion (hole C) was visually checked to confirm that the release layer was in the center and that the ratio of the area of the release layer with respect to the area of the cut-out portion (hole C) was 50% or more.
(5) Paying attention not to move the position of the backing plate set in (4), a gloss meter was disposed to align with the profiled portion, and the 60° gloss was measured.
6) The operations of 4) and 5) were repeated to increase the number of N, and the average value of the measured value at 10 locations was regarded as the 60° gloss value of the release layer. The results are shown in Table 1 and Table 2.

### [Spc of release layer of decorative sheet and melamine decorative plate]

The Spc (arithmetic average curvature at mountaintop point) of the release layer of decorative sheet and melamine decorative plate obtained in Example 1 to Example 8 and Comparative Example 1 to Comparative Example 5 were measured according to the following method. The Spc was the value measured on the surface of the release layer of the decorative sheet using a laser microscope (VK-X3000 from Keyence Corporation) under the following conditions. Incidentally, the Spc is an average value of the measured value at arbitrary 10 locations, selecting the measurement portions so that all the measurement portions are within the release layer. The results are shown in Table 1 and Table 2.

### (Measurement conditions)

Objective lens: 5-fold
Laser wavelength: 661 nm
Area of measurement region at each point: 500 µm × 500 µm.

### [Melamine peeling property evaluation]

Using the melamine decorative plate obtained in Example 1 to Example 8 and Comparative Example 1 to Comparative Example 5, the cellophane tape resistance test was carried out to the region including the release layer to evaluate the melamine peeling property according to the following evaluation criteria. The results are shown in Table 1 and Table 2.

### (Cellophane tape resistance test method)

1) 15 cm to 30 cm of Cellotape (registered trademark) from NICHIBAN Co., Ltd., (No. 405 (Industrial), 24 mm width) was taken out, 5 cm on the edge was removed, and the pressure-sensitive adhesive surfaces of the remaining portion were adhered to each other (this portion was used as a grip portion for peeling).
2) The pressure-sensitive adhesive surface on the edge was adhered to the testing portion, and rubbed with, for example, a cloth from above to make it firmly adhere.
3) The portion wherein the pressure-sensitive adhesive surfaces were adhered to each other in 1) was grasped, and pulled vigorously in the direction of 45 degrees.
4) The melamine layer of the pressure-sensitive adhesive surface portion and the surface of the tested portion were visually checked to evaluate according to the criteria of A, B, and C.
5) 1) to 4) were carried out at arbitral 10 locations on the release layer, and the most common grade (when multiple grades were equally frequent, a worse grade was adopted) was determined as the evaluation of the melamine peeling property.

### (Evaluation criteria)

A: Little melamine peel was observed, and no melamine remains on the release layer.
B: Although significant peel of melamine was observed, it was able to peel by the test.
C: No melamine peel was observed, and most of the melamine was remained on the release layer after the test.

(The majority of melamine on the release layer (90% or more of the area of the release layer) could not be peeled off by the test)

### [Gloss matte designability evaluation]

The gloss matte designability of the melamine decorative plate obtained in Example 1 to Example 8 and Comparative Example 1 to Comparative Example 5 was evaluated visually. Specifically, under the light source of a natural color fluorescent lamp color rendering AA (model number: FLR40S•D-SDL/M from Panasonic Corporation), the obtained decorative plate was respectively observed visually from the position 50 cm away from the decorative plate, and the gloss matte designability and the condition of the matte portion (release layer) were checked.

Observers scored the gloss matte designability in a five-point scale (1 point for the worst, and 5 points for the best) from 1 point to 5 points. Incidentally, the evaluation was carried out in a stepwise manner such as: 1 point when the most of the melamine was remained without being peeled, or marked whitening was observed in the matte portion and in the vicinity thereof, and a sufficient gloss matte design was not confirmed; and 5 points when the peeled melamine residue was not confirmed in the matte portion, and a sufficient gloss matte design was confirmed. The evaluation was respectively carried out by 10 observers, the average point of all the observers was calculated, and the gloss matte designability was evaluated based on the following criteria. The results are shown in Table 1 and Table 2.

### (Evaluation criteria)

A: the average score was 3 or more, when evaluating the gloss matte designability
B: the average score was 2 or more and less than 3, when evaluating the gloss matte designability
C: the average score was less than 2, when evaluating the gloss matte designability

**[Table 1]**

| | | Example 1 | Example 2 | Example 3 | Example 4 | Example 5 | Example 6 | Example 7 | Example 8 |
|---|---|---|---|---|---|---|---|---|---|
| Release layer | Thickness | 2 µm | 2 µm | 2 µm | 2 µm | 2 µm | 2 µm | 2 µm | 6 µm |
| | Releasing agent (pts. mass) | Reactive silicone (6.7 pts. mass) | Reactive silicone (6.7 pts. mass) | Reactive silicone (6.7 pts. mass) | Reactive silicone (2.3 pts. mass) | Reactive silicone (9.0 pts. mass) | Reactive silicone (6.7 pts. mass) | Reactive silicone (6.7 pts. mass) | Reactive silicone (6.7 pts. mass) |
| | Matting agent Particle size (pts. mass) | Silica Particle sz 2 µm (13.3 pts. mass) | Silica Particle sz 2 µm (9.0 pts. mass) | Silica Particle sz 2 µm (17.7 pts. mass) | Silica Particle sz 2 µm (13.3 pts. mass) | Silica Particle sz 2 µm (13.3 pts. mass) | Silica Particle sz 5 µm (9.0 pts. mass) | Silica Particle sz 1 µm (17.7 pts. mass) | Silica Particle sz 2 µm (17.7 pts. mass) |
| | Pure water contact agl (° ) | 113.3 | 121.5 | 93.2 | 982 | 122.2 | 88.2 | 118.4 | 120.8 |
| | 60° gloss value | 3.6 | 9.1 | 2.4 | 3.7 | 6.8 | 1.9 | 6.6 | 7.1 |
| | Spc (mm⁻¹) (before press) | 176 | 105 | 181 | 172 | 152 | 321 | 88 | 117 |
| | Spc (mm⁻¹) (after press) | 60 | 41 | 71 | 64 | 53 | 137 | 15 | 21 |
| Evaluation | Melamine Peeling property | A | A | B | B | A | B | A | A |
| | GM designability | A | B | A | A | B | A | B | B |

**[Table 2]**

| | | Comp. Ex. 1 | Comp. Ex. 2 | Comp. Ex. 3 | Comp. Ex. 4 | Comp. Ex. 5 |
|---|---|---|---|---|---|---|
| Release layer | Thickness | 2 µm | 2 µm | 2 µm | 2 µm | 6 µm |
| | Releasing agent (pts. mass) | Reactive silicone (6.7 pts. mass) | Reactive silicone (1.0 pts. mass) | Reactive silicone (6.7 pts. mass) | Reactive silicone (6.7 pts. mass) | Reactive silicone (6.7 pts. mass) |
| | Matting agent Particle size (pts. mass) | Silica Particle sz 2 µm (4.3 pts. mass) | Silica Particle sz 2 µm (13.3 pts. mass) | Silica Particle sz 5 µm (13.3 pts. mass) | Silica Particle sz 1 µm (13.3 pts. mass) | Silica Particle sz 2 µm (13.3 pts. mass) |
| | Pure water contact agl (° ) | 121.7 | 84.2 | 80.3 | 114.6 | 121.2 |
| | 60° gloss value | 12.6 | 2.6 | 1.6 | 8.9 | 9.4 |
| | Spc (mm⁻¹) (before press) | 68 | 191 | 346 | 77 | 75 |
| | Spc(mm⁻¹) (after press) | 7 | 66 | 142 | 9 | 9 |
| Evaluation | Melamine Peeling property | A | C | C | A | A |
| | GM designability | C | A | A | C | C |

As shown in Table 1, when the decorative sheets obtained in Example 1 to Example 8 were used, the results were excellent in both the melamine peeling property and gloss matte designability. Meanwhile, as shown in Table 2, it was confirmed that the 60° gloss value of the decorative sheet obtained in Comparative Example 1 was high, and the Spc value was low so that it was inferior in the gloss matte designability. Also, it was confirmed that the pure water contact angle of the decorative sheets obtained in Comparative Example 2 and Comparative Example 3 were low, and were inferior in the melamine peeling property. It was confirmed that, since the Spc was low, the decorative sheets obtained in Comparative Examples 4, 5 were inferior in gloss matte designability.

### [Example 9]

### (Production of decorative sheet)

As a porous substrate, a paper substrate (titanium base paper for construction materials PM-83P from KJ SPECIALTY PAPER Co., Ltd., basis weight of 80 g/m²) was prepared. By measuring according to JIS-P8252, the ash content of the paper substrate was 18%. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the ink for forming a release layer 1, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 9 was obtained.

### [Example 10]

### (Production of decorative sheet)

As a porous substrate, a paper substrate (titanium base paper for construction materials PM-83P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the ink for forming a release layer 3, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 10 was obtained.

### [Example 11]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 13, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 13>

- Ionizing radiation curable monomer (ARONIX M-400 from Toagosei Co., Ltd.) 46.8 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 2 µm) 8 parts by mass (13.3 parts by mass with respect to 100 parts by mass of the total solid components)
- Hindered amine based light stabilizer (Tinuvin 123 from BASF Japan Ltd.) 1.2 parts by mass (2.0 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 11 was obtained.

### [Example 12]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 14, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 14>

- Ionizing radiation curable monomer (ARONIX M-400 from Toagosei Co., Ltd.) 45 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 2 µm) 8 parts by mass (13.3 parts by mass with respect to 100 parts by mass of the total solid components)
- Hindered amine based light stabilizer (Tinuvin 123 from BASF Japan Ltd.) 3 parts by mass (5.0 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 12 was obtained.

### [Example 13]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 15, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 15>

- Ionizing radiation curable monomer (ARONIX M-400 from Toagosei Co., Ltd.) 44 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 2 µm) 9 parts by mass (15.0 parts by mass with respect to 100 parts by mass of the total solid components)
- Hindered amine based light stabilizer (Tinuvin 123 from BASF Japan Ltd.) 3 parts by mass (5.0 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Example 13 was obtained.

### [Comparative Example 6]

### (Production of decorative sheet)

As a porous substrate, a paper substrate (titanium paper KW-1002P from KJ SPECIALTY PAPER Co., Ltd., basis weight of 100 g/m²) was prepared. By measuring according to JIS-P8252, the ash content of the paper substrate was 36%. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the ink for forming a release layer 1, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Comparative Example 6 was obtained.

### [Comparative Example 7]

### (Production of decorative sheet)

As a porous substrate, a paper substrate (titanium base paper for construction materials PM-77P from KJ SPECIALTY PAPER Co., Ltd.) was prepared. By the gravure printing method using the printing ink described above, a design layer (pattern layer) having a thickness of 2 µm was partially stacked on the paper substrate to produce a stone-grain pattern design. Further, a release layer having a thickness of 2 µm was formed by stacking the following ink for forming a release layer 16, on the pattern layer, so as to align with the pattern layer, and irradiating electron beams of 3 Mrad at an accelerating voltage of 165 kV. Thereby, a decorative sheet including a porous substrate, a design layer and a release layer, stacked in this order, was produced.

### <Ink for forming release layer 16>

- Ionizing radiation curable monomer (ARONIX M-400 from Toagosei Co., Ltd.) 42 parts by mass
- Reactive silicone (X-22-164B from Shin-Etsu Chemical Co., Ltd.) 4 parts by mass (6.7 parts by mass with respect to 100 parts by mass of the total solid components)
- Silane coupling-treated silica (particle size of 2 µm) 8 parts by mass (13.3 parts by mass with respect to 100 parts by mass of the total solid components)
- Hindered amine based light stabilizer (Tinuvin 123 from BASF Japan Ltd.) 6 parts by mass (10.0 parts by mass with respect to 100 parts by mass of the total solid components)
- Methyl ethyl ketone 40 parts by mass

### (Production of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet (precursor stacked body).

A stacked body was obtained by stacking the impregnated decorative sheet on the core substrate, and further stacking the release film on the impregnated decorative sheet so that the peeling layer of the release film was in contact with the printed surface of the impregnated decorative sheet.

The formed stacked body was sandwiched between two mirror plates, and heat molded using a hot press device, at a pressure of 100 kg/cm², under the conditions of molding temperature of 150°C for 10 minutes, thereby heat cured the uncured melamine resin composition to form a cured resin layer including a cured product of melamine resin. Thus, a cured stacked body was formed. Then, the cured stacked body was taken out from between the two mirror plates, the release film was peeled off from the cured resin layer including the cured product of the melamine resin, and a melamine decorative plate of Comparative Example 7 was obtained.

### [Pure water contact angle of release layer of decorative sheet]

The pure water contact angle of the release layer of the decorative sheet obtained in Example 9 to Example 12 and Comparative Example 6, Comparative Example 7 were measured. The method for measuring was similar to that described above. The results are shown in Table 3.

### [60° gloss value of release layer of decorative sheet]

The 60° gloss value of the release layer of the decorative sheet obtained in Example 9 to Example 12 and Comparative Example 6, Comparative Example 7 were measured. The method for measuring was similar to that described above. The results are shown in Table 3.

### [Spc of release layer of decorative sheet and melamine decorative plate]

The Spc (arithmetic average curvature at mountaintop point) of the release layer of decorative sheet and melamine decorative plate obtained in Example 9 to Example 12 and Comparative Example 6, Comparative Example 7 were measured. The method for measuring was similar to that described above. The results are shown in Table 3.

### [Melamine peeling property evaluation]

Using the melamine decorative plate obtained in Example 9 to Example 12 and Comparative Example 6, Comparative Example 7, the melamine peeling property was evaluated. The evaluation criteria were similar to those described above. The results are shown in Table 3.

### [Gloss matte designability evaluation]

The gloss matte designability of the melamine decorative plate obtained in Example 9 to Example 12 and Comparative Example 6, Comparative Example 7 was evaluated. The evaluation criteria were similar to those described above. The results are shown in Table 3.

**[Table 3]**

| | | Example 9 | Example 10 | Example 11 | Example 12 | Example 13 | Comp. Ex. 6 | Comp. Ex. 7 |
|---|---|---|---|---|---|---|---|---|
| Release layer | Thickness | 2 µm | 2 µm | 2 µm | 2 µm | 2 µm | 2 µm | 2 µm |
| | Releasing agent (pts. mass) | Reactive silicone (6.7 pts. mass) | Reactive silicone (6.7 pts. mass) | Reactive silicone (6.7 pts. mass) | Reactive silicone (6.7 pts. mass) | Reactive silicone (6.7 pts. mass) | Reactive silicone (6.7 pts. mass) | Reactive silicone (6.7 pts. mass) |
| | Matting agent Particle size (pts. mass) | Silica Particle sz 2 µm (13.3 pts. mass) | Silica Particle sz 2 µm (17.7 pts. mass) | Silica Particle sz 2 µm (13.3 pts. mass) | Silica Particle sz 2 µm (13.3 pts. mass) | Silica Particle sz 2 µm (15.0 pts. mass) | Silica Particle sz 2 µm (13.3 pts. mass) | Silica Particle sz 2 µm (13.3 pts. mass) |
| | Porous substrate | PM-83P | PM-83P | PM-77P | PM-77P | PM-77P | KW-1002P | PM-77P |
| | Light stabilizer (pts. mass) | - - | | HALS (2.0 pts. mass) | HALS (5.0 pts. mass) | HALS (5.0 pts. mass) | - | HALS (10.0 pts. mass) |
| | Pure water contact agl (° ) | 120.1 | 108.1 | 115.6 | 116.2 | 115.5 | 82.7 | 115.1 |
| | 60° gloss value | 6.6 | 4.4 | 4.7 | 7.1 | 5.0 | 2.0 | 10.8 |
| | Spc (mm⁻¹) (before press) | 158 | 169 | 167 | 141 | 161 | 207 | 104 |
| | Spc(mm⁻¹) (after press) | 57 | 60 | 59 | 52 | 58 | 72 | 45 |
| Evaluation | Melamine Peeling property | A | A | A | A | A | C | A |
| | GM designability | B | A | A | B | A | A | C |

As shown in Table 3, for example, although the ink for forming a release layer 1 was used in both of Example 9 and Example 1 described above, the types of the porous substrates were different. Specifically, the porous substrate (PM-83P) used in Example 9 had a lower ash content than the porous substrate (PM-77P) used in Example 1, making it difficult for the ink for forming a release layer 1 to permeate. As a result, the pure water contact angle and 60° gloss value increased and the Spc decreased slightly in Example 9, compared to Example 1. As described above, the type of the porous substrate influences the pure water contact angle, 60° gloss value and Spc. Therefore, the pure water contact angle, 60° gloss value and Spc have to be adjusted in the predetermined ranges, in view of the type of the porous substrate. In the present disclosure, good peeling property and good gloss matte designability can be obtained by adjusting the pure water contact angle, 60° gloss value and Spc in the predetermined range, in view of the type of the porous substrate. The similar relationship was confirmed between Example 10 and Example 3.

Meanwhile, although the ink for forming a release layer 1 was used in both of Comparative Example 6 and Example 1 described above, the types of the porous substrates were different. Specifically, the porous substrate (KW-1002P) used in Comparative Example 6 had a higher ash content than the porous substrate (PM-77P) used in Example 1, making it easier for the ink for forming a release layer 1 to permeate. As a result, the pure water contact angle and 60° gloss value decreased and the Spc increased in Comparative Example 6, compared to Example 1. As described above, the type of the porous substrate influences the pure water contact angle, 60° gloss value and Spc. The peeling property was inferior in Comparative Example 6, since the pure water contact angle was low.

Also, although the same porous substrate, as in Example 1 described above, was used in Example 11 and Example 12, the added amount of the light stabilizer included in the ink for forming a release layer was different. Although the added amount of the light stabilizer did not have a significant effect on the pure water contact angle, when the added amount of the light stabilizer was increased, the 60° gloss value tended to increase and the Spc tended to decrease. As described above, whether the light stabilizer was added or not, and the added amount of the light stabilizer influenced the 60° gloss value and Spc. Therefore, the pure water contact angle, 60° gloss value and Spc have to be adjusted in the predetermined ranges, in view of whether the light stabilizer was added or not, and the added amount of the light stabilizer. In the present disclosure, good peeling property and good gloss matte designability can be obtained by adjusting the pure water contact angle, 60° gloss value and Spc in the predetermined range, in view of whether the light stabilizer was added or not, and the added amount of the light stabilizer.

Meanwhile, although the same porous substrate, as in Example 11 and Example 12, was used in Comparative Example 7, the added amount of the light stabilizer included in the ink for forming a release layer was different. When the added amount of the light stabilizer was increased, the 60° gloss value tended to increase and the Spc tended to decrease. Since the 60° gloss value in Comparative Example 7 was high, the gloss matte designability was inferior. Also, comparing Example 12 and Example 13, the gloss matte designability was improved in Example 13 than that in Example 12, since the 60° gloss value decreased and the Spc increased by increasing the ratio of the matting agent.

As described above, the present disclosure provides, for example, the following inventions.

[1] A decorative sheet used for a production of a resin-impregnated decorative plate,
   the decorative sheet comprising a porous substrate; a design layer; and a release layer formed in a pattern, in this order in a thickness direction, wherein
   a 60° gloss value of the release layer is 10 or less;
   a pure water contact angle of the release layer is 85° or more; and
   a Spc (arithmetic average curvature at mountaintop point) of the release layer is 80 mm⁻¹ or more.
[2] The decorative sheet according to [1], wherein the pure water contact angle of the release layer is 100° or more.
[3] The decorative sheet according to [1] or [2], wherein the 60° gloss value of the release layer is 6.5 or less.
[4] The decorative sheet according to any one of [1] to [3], wherein the Spc (arithmetic average curvature at mountaintop point) of the release layer is 120 mm⁻¹ or more.
[5] The decorative sheet according to any one of [1] to [4], wherein the release layer includes a releasing agent.
[6] The decorative sheet according to [5], wherein the releasing agent includes a reactive silicone oil.
[7] The decorative sheet according to [5] or [6], wherein a content of the releasing agent, with respect to 100 parts by mass of the release layer, is 1 part by mass or more and 10 parts by mass or less.
[8] The decorative sheet according to any one of [1] to [7], wherein the release layer includes a matting agent.
[9] The decorative sheet according to [8], wherein the matting agent includes an inorganic particle.
[10] The decorative sheet according to [8] or [9], wherein a content of the matting agent, with respect to 100 parts by mass of the release layer, is 5 parts by mass or more and 20 parts by mass or less.
[11] The decorative sheet according to any one of [8] to [10], wherein an average particle size of the matting agent is 1 µm or more and 5 µm or less.
[12] The decorative sheet according to any one of [1] to [11], wherein a thickness of the release layer is 0.5 µm or more and 8 µm or less.
[13] The decorative sheet according to any one of [1] to [12], wherein the release layer includes a cured product of a curable resin X.
[14] The decorative sheet according to [13], wherein the curable resin X in the release layer is an ionizing radiation curable resin.
[15] The decorative sheet according to any one of [1] to [14], wherein the resin-impregnated decorative plate is a melamine decorative plate.
[16] A resin-impregnated decorative plate comprising:
   a decorative sheet including a porous substrate, a design layer, and a release layer formed in a pattern, in this order in a thickness direction;
   a core substrate disposed so as to face the porous substrate in the decorative sheet; and
   a cured resin layer disposed between patterns of the release layer, thicker than the release layer, and including a cured product of a curable resin Y, wherein
   the porous substrate includes the cured product of the curable resin Y;
   a pure water contact angle of the release layer is 85° or more; and
   a Spc (arithmetic average curvature at mountaintop point) of the release layer is 10 mm⁻¹ or more.
[17] The resin-impregnated decorative plate according to [16], wherein a 60° gloss value of the release layer is 10 or less.
[18] The resin-impregnated decorative plate according to [16] or [17], wherein a ratio of a 60° gloss value of the cured resin layer, with respect to the 60° gloss value of the release layer, is 1.2 or more.
[19] A method for producing a resin-impregnated decorative plate, the method comprising:
   a preparing step of preparing the decorative sheet according to any one of [1] to [15];
   a stacked body forming step of forming a stacked body (i) including a core substrate, the decorative sheet, a curable resin layer including a curable resin Y, and a release film, in this order in a thickness direction, (ii) disposed so that a porous substrate side surface of the decorative sheet faces the core substrate, and (iii) the decorative sheet is impregnated with the curable resin Y;
   a heating and pressurizing step of obtaining a cured stacked body by heating and pressurizing the stacked body to cured the curable resin Y while forming a cured resin layer from the curable resin layer; and
   a peeling step of removing the cured resin layer disposed at a position overlapping with the release layer in the thickness direction, while remaining the cured resin layer disposed between patterns of the release layer, by peeling the release film from the cured stacked body.

### Reference Signs List

1: porous substrate
2: design layer
3: matte layer
10: decorative sheet
20: core substrate
30: curable resin layer
40: release film
100: resin-impregnated decorative plate

## Claims

1. A decorative sheet used for a production of a resin-impregnated decorative plate,
the decorative sheet comprising a porous substrate; a design layer; and a release layer formed in a pattern, in this order in a thickness direction, wherein
a 60° gloss value of the release layer is 10 or less;
a pure water contact angle of the release layer is 85° or more; and
a Spc (arithmetic average curvature at mountaintop point) of the release layer is 80 mm⁻¹ or more.

2. The decorative sheet according to claim 1, wherein the pure water contact angle of the release layer is 100° or more.

3. The decorative sheet according to claim 1, wherein the 60° gloss value of the release layer is 6.5 or less.

4. The decorative sheet according to claim 1, wherein the Spc (arithmetic average curvature at mountaintop point) of the release layer is 120 mm⁻¹ or more.

5. The decorative sheet according to claim 1, wherein the release layer includes a releasing agent.

6. The decorative sheet according to claim 5, wherein the releasing agent includes a reactive silicone oil.

7. The decorative sheet according to claim 5, wherein a content of the releasing agent, with respect to 100 parts by mass of the release layer, is 1 part by mass or more and 10 parts by mass or less.

8. The decorative sheet according to claim 1, wherein the release layer includes a matting agent.

9. The decorative sheet according to claim 8, wherein the matting agent includes an inorganic particle.

10. The decorative sheet according to claim 8, wherein a content of the matting agent, with respect to 100 parts by mass of the release layer, is 5 parts by mass or more and 20 parts by mass or less.

11. The decorative sheet according to claim 8, wherein an average particle size of the matting agent is 1 µm or more and 5 µm or less.

12. The decorative sheet according to claim 1, wherein a thickness of the release layer is 0.5 µm or more and 8 µm or less.

13. The decorative sheet according to claim 1, wherein the release layer includes a cured product of a curable resin X.

14. The decorative sheet according to claim 13, wherein the curable resin X in the release layer is an ionizing radiation curable resin.

15. The decorative sheet according to claim 1, wherein the resin-impregnated decorative plate is a melamine decorative plate.

16. A resin-impregnated decorative plate comprising:
a decorative sheet including a porous substrate, a design layer, and a release layer formed in a pattern, in this order in a thickness direction;
a core substrate disposed so as to face the porous substrate in the decorative sheet; and
a cured resin layer disposed between patterns of the release layer, thicker than the release layer, and including a cured product of a curable resin Y, wherein
the porous substrate includes the cured product of the curable resin Y;
a pure water contact angle of the release layer is 85° or more; and
a Spc (arithmetic average curvature at mountaintop point) of the release layer is 10 mm⁻¹ or more.

17. The resin-impregnated decorative plate according to claim 16, wherein a 60° gloss value of the release layer is 10 or less.

18. The resin-impregnated decorative plate according to claim 16, wherein a ratio of a 60° gloss value of the cured resin layer, with respect to the 60° gloss value of the release layer, is 1.2 or more.

19. A method for producing a resin-impregnated decorative plate, the method comprising:
a preparing step of preparing the decorative sheet according to any one of claims 1 to 15;
a stacked body forming step of forming a stacked body (i) including a core substrate, the decorative sheet, a curable resin layer including a curable resin Y, and a release film, in this order in a thickness direction, (ii) disposed so that a porous substrate side surface of the decorative sheet faces the core substrate, and (iii) the decorative sheet is impregnated with the curable resin Y;
a heating and pressurizing step of obtaining a cured stacked body by heating and pressurizing the stacked body to cured the curable resin Y while forming a cured resin layer from the curable resin layer; and
a peeling step of removing the cured resin layer disposed at a position overlapping with the release layer in the thickness direction, while remaining the cured resin layer disposed between patterns of the release layer, by peeling the release film from the cured stacked body.
